# EUROPÄISCHE PATENTSCHRIFT

(11) **EP 3 707 978 B1**
(45) Veröffentlichungstag und Bekanntmachung des Hinweises auf die Patenterteilung: **07.06.2023**
(21) Anmeldenummer: 20161794.1
(22) Anmeldetag: 09.03.2020
(51) Int. Cl.: A01B 35/06, A01B 35/12, A01B 35/24

(54) **BODENBEARBEITUNGSMASCHINE SOWIE VERFAHREN ZUR BODENBEARBEITUNG**
SOIL WORKING MACHINE AND SOIL WORKING METHOD
MACHINE DE TRAITEMENT DU SOL ET PROCÉDÉ DE TRAITEMENT DU SOL

(30) Priorität: 12.03.2019 DE 102019106185
(43) Veröffentlichungstag der Anmeldung: 16.09.2020
(73) Patentinhaber: Horsch Maschinen GmbH, 92421 Schwandorf (DE)
(72) Erfinder: Hägler, Josef, 92533 Wernberg-Köblitz (DE); Rodestock, Christian, 92637 Weiden (DE); Kralitschek, Alexander, 92421 Schwandorf (DE)
(74) Vertreter: v. Bezold & Partner Patentanwälte - PartG mbB

(56) Entgegenhaltungen:
- EP-A1- 1 232 680
- CA-A- 1 154 997
- CH-A- 401 565
- DE-C- 246 052

## Beschreibung

Die Erfindung betrifft eine Bodenbearbeitungsmaschine gemäß den Merkmalen des Patentanspruches 1 sowie ein Verfahren zur Bodenbearbeitung mit den Merkmalen des Verfahrensanspruchs 14.

Eine Bodenbearbeitungsmaschine ist bspw. durch die EP 0 400 366 A1 bereits bekannt geworden. Bei dieser Bodenbearbeitungsmaschine werden zur Bearbeitung einer landwirtschaftlichen Fläche, insbesondere als Hackelemente, d.h. als Schare sog. Gänsefußschare eingesetzt, welche Gänsefußschare an federnde Eigenschaften aufweisenden Federzinken angebaut sind. Die Federzinken sind an Querträgern angebracht, wobei die Querträger gegenüber einem Parallelogramm verschwenkbar sind wodurch eine vereinfachte Schnittwinkelverstellung erreicht werden soll. Die Gänsefußschare weisen jeweils eine Scharspitze, d.h. keilförmige Vorderkante und sich von der Vorderkante quer und entgegengesetzt zur Vorwärtsrichtung erstreckende Schneiden auf. Eine weitere bekannte Bodenbearbeitungsmaschine ist in dem Dokument CH 401 565 A beschrieben.

Bei den aus dem Stand der Technik bekannten Bodenbearbeitungsmaschinen war es bislang üblich, dass die Gänsefußschare in deren Grundstellung, d.h. in der Position in der die Schare nicht in eine Bodenfläche eintauchen und somit keine Betriebskräfte auf diese wirken, mittels der Federzinken derartig an den Bodenbearbeitungsmaschinen angebaut wurden, dass diese einen sog. Untergriff erzeugen, was insbesondere dadurch erreicht wurde, indem die Schneiden gegenüber einer Fahrtrichtung bzw. gegenüber einer Vorwärtsrichtung in einem Winkel von vorne unten nach hinten oben orientiert waren. Wobei durch einen derartigen Untergriff insbesondere das Eindringen der jeweiligen Schare in eine Bodenfläche verbessert werden sollte. Dies hatte jedoch zur Folge, dass die Gänsefußschare nicht mit deren gesamter Breite die Bodenfläche bearbeitet haben. Um die gesamte Breite der Gänsefußschare nutzen zu können musste entweder die Arbeitstiefe erhöht werden, oder die Anzahl an, an der Bodenbearbeitungsmaschine vorhandenen, Gänsefußscharen musste erhöht werden, was jedoch sowohl ackerbauliche als auch finanzielle Nachteile zur Folge hatte. Dies wurde durch die Verwendung von federnde Eigenschaften aufweisende Zinken noch weiter verschlechtert, da durch die Einwirkung von Betriebskräften während der Bodenbearbeitung die Zinken eine entgegengesetzt zur Vorwärtsrichtung gerichtete Verformung erfuhren und somit der Winkel der Schneiden gegenüber der Vorwärtsrichtung noch weiter vergrößert und somit die wirksame Arbeitsbreite eines Gänsefußschares noch weiter verringert wurde. Dies wurde insbesondere durch große Betriebskräfte, welche bspw. durch trockene, schwere Böden aber auch durch große Arbeitstiefen erzeugt wurden nochmals verschlechtert.

Mittels der aus dem Stand der Technik bekannten Bodenbearbeitungsmaschinen war somit eine ganzflächige Bearbeitung einer Bodenfläche bei einer Mindestzahl an Scharen und einer geringen Arbeitstiefe nicht oder nur bedingt möglich, wodurch derartige Bodenbearbeitungsmaschinen insbesondere bei einer flachen mechanischen Unkrautbekämpfung nur begrenzt eingesetzt werden konnten.

Der Erfindung liegt daher die Aufgabe zugrunde, eine Bodenbearbeitungsmaschine zur Verfügung zu stellen, mit der Nachteile herkömmlicher Bodenbearbeitungsmaschinen vermieden werden können. Der Erfindung liegt insbesondere die Aufgabe zugrunde, eine variabel einsetzbare Bodenbearbeitungsmaschine zur Verfügung zu stellen, mittels der eine ganzflächige Bodenbearbeitung mit einer minimalen Anzahl an Scharen bei einer minimalen Arbeitstiefe erreicht wird.

Diese Aufgabe wird gelöst durch eine Bodenbearbeitungsmaschine mit den Merkmalen des Anspruch 1 sowie durch ein Verfahren zur Bodenbearbeitung mit den Merkmalen des Verfahrensanspruch 14. Vorteilhafte Weiterbildungen der Erfindung sind in den abhängigen Ansprüchen und der Beschreibung angegeben.

Die Erfindung betrifft eine Bodenbearbeitungsmaschine, mit einem, sich in Vorwärtsrichtung erstreckende Längsträger und quer zur Vorwärtsrichtung erstreckende Querträger aufweisenden Maschinenrahmen.

Um eine variabel einsetzbare Bodenbearbeitungsmaschine zu erreichen ist vorgesehen, dass zumindest ein Querträger mittels einer quer zur Vorwärtsrichtung orientierten Lagerung drehbar zu zumindest einem Längsträger gelagert ist, wobei am drehbaren Querträger, zumindest ein, federnde Eigenschaften aufweisender, Zinken mit Schar angebracht ist, welche federnden Eigenschaften durch Federkräfte des Zinken definiert sind und welches Schar eine Vorderkante und von der Vorderkante ausgehende sich quer zur Vorwärtsrichtung erstreckende Schneiden aufweist.

Um darüber hinaus eine Bodenbearbeitungsmaschine zur Verfügung zu stellen, mittels der eine ganzflächige Bodenbearbeitung mit einer minimalen Anzahl an Scharen mit einer minimalen Arbeitstiefe erreicht wird, ist erfindungsgemäß zudem vorgesehen, dass die Drehlage des drehbaren Querträger in Abhängigkeit der Federkräfte des Zinken veränderbar ist.

Infolge dieser Maßnahmen kann somit in Abhängigkeit der insbesondere während einer Feldarbeit auf ein Schar und/oder einen Zinken wirkenden Betriebskräfte, die Drehlage des Querträger derartig verändert werden, dass selbst bei einer durch die Betriebskräfte am Zinken hervorgerufenen Verformung, die Schneiden eines Schares gegenüber einer Vorwärtsrichtung, welche Vorwärtsrichtung insbesondere parallel zu einer Bodenfläche sein kann, derartig orientiert sind, dass diese jeweils mit deren gesamten Breite eine Bodenfläche bearbeiten können, ohne hierfür die Anzahl an Schare oder die Arbeitstiefe erhöhen zu müssen. Insbesondere kann die Drehlage derartig verändert werden, dass die Schneiden sich in Betrieb der Bodenbearbeitungsmaschine, durch auf diese wirkende Betriebskräfte im Wesentlichen gerade, d.h. waagerecht stellen. Somit wird mittels der erfindungsgemäßen Bodenbearbeitungsmaschine eine ultraflache und zudem ganzflächige Bodenbearbeitung ermöglicht.

Es kann vorgesehen sein, dass die Bodenbearbeitungsmaschine zumindest eine Grundstellung und eine Arbeitsstellung aufweist, wobei die Drehlage des zumindest einen drehbaren Querträger in der Grundstellung und in der Arbeitsstellung gleich ist. Somit erfolgt erfindungsgemäß eine Veränderung der Orientierung der Schneiden lediglich durch aus das Schar und/oder den Zinken wirkende Betriebskräften, wobei die Drehlage jeweils derartig definiert werden kann, dass durch die auf das Schar und/oder den Zinken wirkende Betriebskräfte jeweils eine optimierte Orientierung der Schneiden eines Schares erreicht wird.

Die Bodenbearbeitungsmaschine kann eine Grundstellung aufweisen, wobei in der Grundstellung die Drehlage des drehbaren Querträgers insbesondere derartig ist, dass die Schneiden gegenüber der Vorwärtsrichtung in einem Winkel α von vorne oben nach hinten unten orientiert sind. Dies hat insbesondere zweckmäßig zur Folge, dass sich die Schneiden, durch auf diese wirkende Betriebskräfte im Wesentlichen gerade, insbesondere im wesentlichen Parallel zur Vorwärtsrichtung stellen und/oder ausrichten.

Insbesondere kann vorgesehen sein, dass die Schneiden des Schares in einer Grundstellung der Bodenbearbeitungsmaschine nicht auf Untergriff montiert sind, zweckmäßig insbesondere orientiert sind.

Die Grundstellung kann insbesondere durch einen Betriebsmodus der Bodenbearbeitungsmaschine definiert sein, in der keine oder nur geringe Betriebskräfte auf das Schar und/oder den Zinken wirken. Die Grundstellung kann insbesondere dann vorhanden sein, wenn das Schar nicht mit einer Bodenfläche in Kontakt steht, insbesondere nicht in eine Bodenfläche eindringt.

Die Bodenbearbeitungsmaschine kann darüber hinaus eine Arbeitsstellung aufweisen, wobei die Arbeitsstellung insbesondere vorhanden sein kann, wenn dass Schar in eine Bodenfläche eindringt. Es kann zudem vorgesehen sein, dass die Drehlage des Querträgers derartig definiert ist, dass in einer Arbeitsstellung der Bodenbearbeitungsmaschine die Schneiden zumindest weitgehend parallel zur Vorwärtsrichtung orientiert sind.

Gemäß einem weiteren Aspekt kann vorgesehen sein, dass in einer Arbeitsstellung der Bodenbearbeitungsmaschine die Scheiden gegenüber einer Vorwärtsrichtung in einem Winkel β von vorne oben nach hinten unten orientiert sind und/oder in einem Winkel β von vorne unten nach hinten oben orientiert sind, wobei der Winkel β maximal 15° oder maximal 10° oder maximal 5° oder maximal 2° beträgt und/oder insbesondere kleiner als der Winkel α der Grundstellung ist.

Wobei darauf hingewiesen sei, dass die Winkel β insbesondere während eines Normalbetriebes der Bodenbearbeitungsmaschine vorhanden sind, d.h. dass die Zinken nicht bspw. wegen eines Steins ausfedern bzw. keinem Stein ausweichen müssen, sondern mit zumindest weitgehend gleichbleibender Betriebskraft entlang einer Bodenfläche geführt werden.

Erfindungsgemäß kann die Arbeitsstellung insbesondere durch einen Betriebsmodus der Bodenbearbeitungsmaschine definiert sein, in der Betriebskräfte auf das Schar und/oder den Zinken wirken, wobei die Betriebskräfte insbesondere eine derartige Größe aufweisen, dass der Zinken Verformt wird, zweckmäßig insbesondere entgegengesetzt zur Vorwärtsrichtung verformt wird. Wobei die Verformung insbesondere innerhalb elastischer Grenzen des Zinkens erfolgt.

Wobei darauf hingewiesen sei, dass die Betriebskräfte insbesondere während eines Normalbetriebes der Bodenbearbeitungsmaschine vorhanden sind, d.h. dass die Zinken nicht bspw. wegen eines Steins ausfedern bzw. keinem Stein ausweichen müssen, sondern mit zumindest weitgehend gleichbleibender Betriebskraft und/oder Verformung entlang einer Bodenfläche geführt werden.

Um einen kostengünstigen und eine Überlastsicherung aufweisenden Zinken zu erhalten, kann insbesondere zweckmäßig vorgesehen sein, dass der Zinken ein Federzinken ist. Wobei der Zinken zumindest eine, die federnden Eigenschaften, insbesondere die Federkräfte, definierende Windung aufweist. Derartige Federzinken weißen darüber hinaus den Vorteil auf, dass diese aufgrund von deren federnden Eigenschaften während einer Bodenbearbeitung hochfrequente Schwingungen ausüben, wodurch die Bodenbearbeitung mittels dieser noch weiter verbessert werden kann. Die federnden Eigenschaften entsprechend insbesondere der Federkraft ab der der Zinken verformt wird bzw. ab der der Zinken verformt wird und insbesondere ausfedert.

Die federnden Eigenschaften, d.h. insbesondere die Federkräfte, können alternativ oder ergänzend auch mittels einer Druckfeder oder einer Zugfeder definiert werden. Auch andere, federnde Eigenschaften aufweisende Elemente wären denkbar oder einsetzbar.

Gemäß einer bevorzugten Ausführungsvariante der Erfindung kann vorgesehen sein, dass der Zinken als Federzinken ausgebildet ist und die Drehlage des drehbaren Querträger an welchem dieser montiert ist, derartig ist, dass der Federzinken bis zu einer definierten Kraft verformbar ist und nach Erreichen dieser Kraft zumindest weitgehend Form- und Lagestabil ist. Wobei bei der Form- und Lagestabilen Position des Zinkens die Schneiden des Schar, vorzugsweise zumindest weitgehend parallel zur Vorwärtsrichtung orientiert sind. Wobei zudem vorgesehen sein kann, dass die Form- und Lagestabile Position des Zinkens durch auf diesen wirkende Betriebskräfte variieren und entsprechend dieser Betriebskräfte die Drehlage des drehbaren Querträger verändert werden kann oder entsprechend verändert wird.

Um zudem ein kostengünstiges und eine große Arbeitsbreite aufweisendes Schar zu erhalten, kann zudem vorgesehen sein, dass das Schar ein Gänsefußschar ist und eine im wesentlichen Dreieckförmige, eine Vorderkante und von der Vorderkante ausgehende sich quer zur Vorwärtsrichtung erstreckende Schneiden aufweisende, Grundform aufweisen. Wobei die Schneiden sich insbesondere jeweils links und rechts von der Vorderkante und sich quer zur Vorwärtsrichtung erstrecken, zweckmäßig insbesondere symmetrisch links und rechts. Die im wesentlichen Dreieckförmige Grundform kann jeweils Spitze Ecken aufweisen und/oder abgeflachte und/oder bogenförmige Ecken aufweisen. Die Vorderkante kann Keilförmig ausgebildet sein und eine quer zur Vorwärtsrichtung orientierte Schneidkante ausbilden. Die Vorderkannte kann aber auch Keilförmig und/oder Spitz zulaufen und entsprechend eine Scharspitze ausbilden. Die Schneiden können durch eine zumindest abschnittweise gerade verlaufende Kante gebildet sein und/oder durch eine zumindest abschnittweise bogenförmige Kante gebildet sein. Die Vorderkannte und/oder die Schneiden könnten darüber hinaus zumindest abschnittweise mit einem Hartmetall verstärkt sein.

Gemäß einer weiteren Ausführungsvariante der Bodenbearbeitungsmaschine kann vorgesehen sein, dass diese zumindest zwei oder mehr drehbar zu einem Längsträger angeordnete Querträger umfasst. Wobei an den Querträger jeweils eine gleiche und/oder unterschiedliche Anzahl an Zinken mit Schar angebracht sein kann. Auch können die Zinken gleich und/oder unterschiedlich ausgeführt sein, insbesondere unterschiedliche federnden Eigenschaften aufweisen. Auch können die Schare gleich und/oder unterschiedlich ausgeführt sein, insbesondere unterschiedliche Schneiden aufweisen.

Insofern die Bodenbearbeitungsmaschine zwei oder mehr Querträger umfasst können diese gemäß einer bevorzugten Ausführungsvariante gekoppelt sein, so dass die Querträger jeweils die gleiche Drehlage aufweisen. Die Koppelung kann bspw. mittels einer Koppelstange und/oder mittels einer Aktors erfolgen. Die Koppelung kann insbesondere jeweils derartig sein, dass zumindest zwei Querträger miteinander verbunden sind.

Gemäß einer Weiterbildung der Erfindung kann vorgesehen sein, dass die Drehlage der Querträger in Abhängigkeit der Anzahl an angebrachten Zinken veränderbar ist und/oder in Abhängigkeit der Arbeitsbreite der Schare veränderbar ist und/oder in Abhängigkeit der Arbeitstiefe der Schare veränderbar ist.

Die quer zur Vorwärtsrichtung orientierte Lagerung kann durch eine Längsachse des Querträgers verlaufen und/oder durch eine parallel zur Längsachse des Querträgers orientierte Achse verlaufen.

Die Lagerung kann zudem derartig quer zur Vorwärtsrichtung orientiert sein, dass der Querträger senkrecht zur Vorwärtsrichtung ausgerichtet ist.

Um einen Vereinfachten Aufbau des Maschinenrahmens zu erhalten, können die Querträger drehbar in den Längsträgern gelagert sein. Vorzugsweise könnte dementsprechend vorgesehen sein, dass die Lagerung zwischen den Längsträger und dem Querträger angebracht ist. Insbesondere, kann vorgesehen sein, dass die Lagerung eine Gleitlagerung ausbildet.

Die Variation der Drehlage kann mechanisch erfolgen bspw. mittels einer Bolzen- und/oder Steckverbindung oder dergl. Gemäß dem Gegenstand der unabhängigen Ansprüche erfolgt die Variation der Drehlage mittels eines Aktors, bspw. mittels eines elektrischen und/oder hydraulischen und/oder pneumatischen Aktors (z.B. Zylinder, Motor, Linearantrieb, Spindelantrieb oder dergl.).

Der Aktor ist mit einer Steuereinrichtung wirkverbunden, wobei die Steuereinrichtung derartig ausgebildet ist, dass mittels dieser eine automatisierte Veränderung der Drehlage erfolgt.

Die Steuereinrichtung kann insbesondere ausgebildet sein, die Drehlage in Abhängigkeit einer Arbeitstiefe und/oder einer Arbeitsbreite der Schare zu erhöhen oder zu verringern. Die Steuereinrichtung kann gemäß einer weiteren Ausführungsvariante alternativ oder ergänzend derartig ausgebildet sein, die Drehlage in Abhängigkeit der federnden Eigenschaften der Zinken und/oder der Betriebskräfte zu erhöhen oder zu verringern.

Die Steuereinrichtung kann gemäß einer Weiterbildung der Erfindung derartig ausgebildet sein, dass mittels dieser die Drehlage des drehbaren Querträger steuer- und/oder regelbar ist.

Die Bodenbearbeitungsmaschine kann als eine an ein Zugfahrzeug anbaubare und/oder als eine mittels eines Zugfahrzeugs und ein Fahrwerk aufweisende gezogene Maschine ausgebildet sein. Die Bodenbearbeitungsmaschine kann vorzugsweise ein Hackgerät sein, welches Hackgerät zweckmäßig zur mechanischen Unkrautbekämpfung Verwendung finden kann.

Es sei noch darauf hingewiesen, dass die Vorwärtsrichtung insbesondere einer Fahrtrichtung mit der die Bodenbearbeitungsmaschine während einer Bodenbearbeitung entlang einer Bodenfläche geführt wird, entspricht.

Wenn zuvor die erfindungsgemäße Bodenbearbeitungsmaschine beschrieben wurde, so sei an dieser Stelle ausdrücklich betont, dass alle Aspekte und Ausführungsvarianten, die im Zusammenhang mit der Bodenbearbeitungsmaschine erläutert wurden, gleichermaßen Teilaspekte des nachfolgend beschriebenen offenbarten, nicht erfindungsgemäßen System zur Bodenbearbeitung sowie des nachfolgenden beschriebenen erfindungsgemäßen Verfahren betreffen oder sein können. Wenn daher an einer Stelle bei der Beschreibung oder auch bei den Anspruchsdefinitionen von der erfindungsgemäßen Bodenbearbeitungsmaschine die Rede ist, so gilt dies gleichermaßen für das offenbarte, nicht erfindungsgemäße System sowie das erfindungsgemäße Verfahren.

Weiterhin ist nicht erfindungsgemäß in System zur Bodenbearbeitung offenbart, vorzugsweise mittels einer Bodenbearbeitungsmaschine, welche Bodenbearbeitungsmaschine, einen sich in Vorwärtsrichtung erstreckende Längsträger und quer zur Vorwärtsrichtung erstreckende Querträger umfassenden Maschinenrahmen aufweist, wobei zumindest ein Querträger mittels einer quer zur Vorwärtsrichtung orientierten Lagerung drehbar zu zumindest einem Längsträger gelagert ist, wobei am drehbaren Querträger, zumindest ein, federnde Eigenschaften aufweisender, Zinken mit Schar angebracht ist, welche federnden Eigenschaften durch Federkräfte des Zinken definiert sind und welches Schar eine Vorderkante und von der Vorderkante ausgehende sich quer zur Vorwärtsrichtung erstreckende Schneiden aufweist.

Das System zeichnet sich insbesondre dadurch aus, dass eine Veränderung einer Drehlage des drehbaren Querträger in Abhängigkeit von durch den Zinken hervorgerufenen Federkräften erfolgt. Somit kann mittels des Systems insbesondere eine volle Arbeitsbreite der Schare während einer, zweckmäßig flachen Bodenbearbeitung genutzt werden.

Das System kann eine Grundstellung und eine Arbeitsstellung aufweisen, wobei zudem insbesondere vorgesehen sein kann, dass die Drehlage des drehbaren Querträger in einer Grundstellung und einer Arbeitsstellung der Bodenbearbeitungsmaschine gleich ist.

Es kann vorgesehen sein, dass in einer Grundstellung der Bodenbearbeitungsmaschine die Drehlage des drehbaren Querträger derartig ist, dass die Schneiden gegenüber der Vorwärtsrichtung in einem Winkel α von vorne oben nach hinten unten orientiert sind, und wobei die Grundstellung durch einen Betriebsmodus der Bodenbearbeitungsmaschine definiert ist, in der keine oder nur geringe Betriebskräfte auf das Schar und/oder den Zinken wirken und durch den Zinken keine oder nur geringe Federkräfte hervorgerufen werden.

Es ist möglich, dass in einer Arbeitsstellung der Bodenbearbeitungsmaschine die Schneiden zumindest weitgehend parallel zur Vorwärtsrichtung orientiert sind und/oder dass in einer Arbeitsstellung der Bodenbearbeitungsmaschine die Schneiden in einem Winkel β von vorne oben nach hinten unten orientiert sind und/oder in einem Winkel β von vorne unten nach hinten oben orientiert sind, wobei der Winkel β maximal 15° oder maximal 10° oder maximal 5° oder maximal 2° beträgt und/oder kleiner als der Winkel α in der Grundstellung ist.

Das System kann insbesondere vorsehen, dass die Arbeitsstellung durch einen Betriebsmodus der Bodenbearbeitungsmaschine definiert ist, in der Betriebskräfte auf das Schar und/oder den Zinken wirken, wobei die Betriebskräfte insbesondere eine derartige Größe aufweisen, dass die durch den Zinken hervorgerufenen Federkräfte größer als in der Grundstellung sind.

Gemäß einem weiteren Aspekt kann das System zudem derartig ausgeführt sein, dass die Drehlage der Querträger in Abhängigkeit der Anzahl an angebrachten Zinken veränderbar ist und/oder in Abhängigkeit der Arbeitsbreite der Schare veränderbar ist und/oder in Abhängigkeit der Arbeitstiefe der Schare veränderbar ist.

Um eine einfache Veränderung der Drehlage zu erreichen kann vorgesehen sein, dass die Veränderung der Drehlage mittels eines Aktors erfolgt, wobei der Aktor mit einer Steuereinrichtung wirkverbunden ist, welche Steuereinrichtung insbesondere derartig ausgebildet ist, dass mittels dieser eine automatisierte Veränderung der Drehlage des drehbaren Querträger erfolgt.

Das System kann insbesondere mittels einer Bodenbearbeitungsmaschine wie hierin beschrieben durchführbar sein.

Ferner betrifft die Erfindung zur Lösung der Aufgaben ein Verfahren zur Bodenbearbeitung nach Anspruch 14, wobei das Verfahren mittels einer Bodenbearbeitungsmaschine durchgeführt wird, welche Bodenbearbeitungsmaschine, einen sich in Vorwärtsrichtung erstreckende Längsträger und quer zur Vorwärtsrichtung erstreckende Querträger aufweisenden Maschinenrahmen, wobei zumindest ein Querträger mittels einer quer zur Vorwärtsrichtung orientierten Lagerung drehbar zu zumindest einem Längsträger gelagert ist, wobei am drehbaren Querträger, zumindest ein, federnde Eigenschaften aufweisender, Zinken mit Schar angebracht ist, welche federnden Eigenschaften durch Federkräfte des Zinken definiert sind und welches Schar eine Vorderkante und von der Vorderkante ausgehende sich quer zur Vorwärtsrichtung erstreckende Schneiden aufweist.

Das Verfahren umfasst einen ersten Betriebsmodus, welcher einer Grundstellung entspricht in der die Drehlage des Querträgers derartig ist, dass die Schneiden gegenüber der Vorwärtsrichtung in einem Winkel α von vorne oben nach hinten unten orientiert sind.

Des Weiteren umfasst das Verfahren einen zweiten Betriebsmodus, welcher einer Arbeitsstellung entspricht in der die Schneiden, unter Beibehaltung der Drehlage des Querträger durch auf den Zinken und/oder das Schar wirkende Betriebskräfte, durch eine Verformung des Zinken eine derartige Lageänderung erfahren, dass diese zumindest weitgehend parallel zur Vorwärtsrichtung orientiert sind oder in einem Winkel β von vorne oben nach hinten unten orientiert sind und/oder in einem Winkel β von vorne unten nach hinten oben orientiert sind, wobei der Winkel β maximal 15° oder maximal 10° oder maximal 5° oder maximal 2° beträgt und/oder kleiner als in der Winkel α der Grundstellung ist.

Das Verfahren sieht darüber hinaus eine Veränderung der Drehlage mittels eines Aktors vor, wobei der Aktor mit einer Steuereinrichtung wirkverbunden ist, welche Steuereinrichtung insbesondere derartig ausgebildet ist, dass mittels dieser eine automatisierte Veränderung der Drehlage des drehbaren Querträger erfolgt.

Es sei noch darauf hingewiesen, dass der Begriff Steuereinrichtung sich auf elektronische und/oder pneumatische und/oder hydraulische Steuerungen beziehen kann, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:

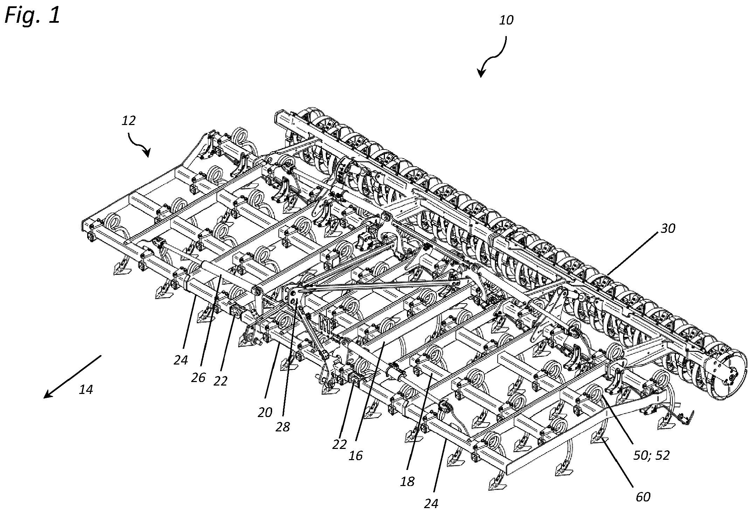

- Figur 1: eine Perspektivansicht einer landwirtschaftlichen Bodenbearbeitungsmaschine mit einem in Vorwärtsrichtung erstreckende Längsträger und quer zur Vorwärtsrichtung erstreckende Querträger umfassenden Maschinenrahmen, wobei an den Querträger jeweils federnde Eigenschaften aufweisende Zinken mit Schar angebracht sind,

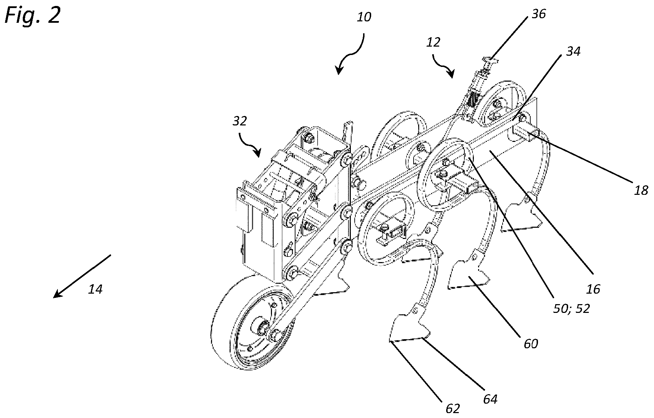

- Figur 2: eine Perspektivansicht einer Einheit einer Bodenbearbeitungsmaschine mit einem in Vorwärtsrichtung erstreckende Längsträger und quer zur Vorwärtsrichtung erstreckende Querträger umfassenden Maschinenrahmen, wobei die Querträger drehbar zu den Längsträger sind und wobei an den Querträger jeweils federnde Eigenschaften aufweisende Zinken mit Schar angebracht sind,

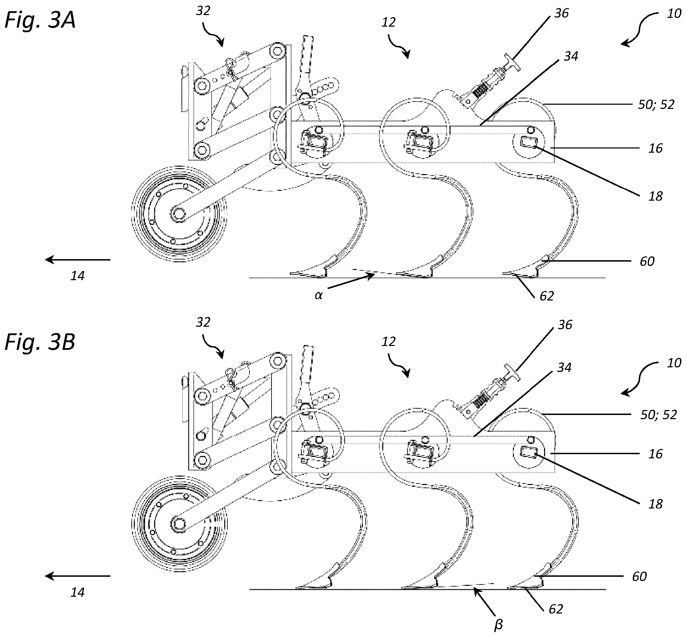

- Figur 3A: eine Seitenansicht einer Einheit gemäß der Figur 2, wobei die Drehlage der Querträger derartig ist, dass die Schneiden von vorne oben nach hinten unten orientiert sind, wobei dies insbesondere einer Grundstellung der Bodenbearbeitungsmaschine entspricht,
- Figur 3B: eine Seitenansicht einer Einheit gemäß der Figuren 2 & 3A, wobei die Drehlage der Querträger identisch zur Drehlage gemäß der Figur 2 ist, jedoch die Zinken durch Einwirkung einer Betriebskraft derartig verformt sind, dass die Schneiden im wesentlichen Parallel zur einer Vorwärtsrichtung orientiert sind bzw. von vorne unten nach hinten oben orientiert sind, wobei dies insbesondere einer Arbeitsstellung der Bodenbearbeitungsmaschine entspricht.

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Bodenbearbeitungsmaschine, dass erfindungsgemäße System sowie das erfindungsgemäße Verfahren ausgestaltet und ausgeführt sein können und stellen keine abschließende Begrenzung dar.

Eine Ausführungsvariante einer Bodenbearbeitungsmaschine 10 geht aus der Perspektivansicht Figur 1 hervor. Die Bodenbearbeitungsmaschine 10 findet vorzugsweise zur Lockerung einer Bodenfläche und/oder zur mechanischen Unkrautbekämpfung Verwendung.

Die Bodenbearbeitungsmaschine 10 umfasst einen Maschinenrahmen 12, welcher aus sich in Vorwärtsrichtung 14 erstreckenden Längsträger 16 und quer zur Vorwärtsrichtung 14 erstreckenden Querträger 18 zusammengesetzt ist.

Der Maschinenrahmen 12 setzt sich gemäß der Figur 1 aus im Wesentlichen drei Teilen zusammen, einem Mittelteil 20 und um horizontale Achsen 22 schwenkbar am Mittelteil 20 angebrachten Seitenteilen 24. Zum Verschwenken der Seitenteile 24 zum Mittelteil 20 um die Achsen 22 sind zweckmäßig pneumatisch oder hydraulisch betätigte bzw. betriebene Zylinder 26 vorgesehen.

Zur Verbindung der Bodenbearbeitungsmaschine mit einem Zugfahrzeug (hier nicht dargestellt) umfasst der Maschinenrahmen 12, insbesondere das Mittelteil 20 eine Verbindungsvorrichtung 28. Wobei die Verbindungsvorrichtung 28 gemäß der Figur 1 als Dreipunktverbindung ausgeführt ist. Es wären jedoch auch noch andere Verbindungsvorrichtungen denkbar.

Zur Variation der Arbeitstiefe der Bodenbearbeitungsmaschine 10 umfasst diese, eine gegenüber dem Maschinenrahmen höhenverstellbare Packerwalze 30.

Die Bodenbearbeitungsmaschine 10 umfasst mehrere (bspw. 4) beabstandet zueinander angeordnete Querträger 18, an welchen Querträger 18 jeweils federnde Eigenschaften aufweisende Zinken 50 mit Schar 60 angeordnet sind.

Weitere Details gehen aus den Figur 2 und 3 hervor, wobei hier jeweils eine Einheit zur Bodenbearbeitung bzw. eine stark vereinfachte Bodenbearbeitungsmaschine 10 in verschiedenen Ansichten bzw. Stellungen abgebildet ist.

Die Einheit, d.h. die Bodenbearbeitungsmaschine 10 umfasst gemäß den Ausführungsbeispielen eine Montagestruktur 32 zur Montage dieser an bspw. einer Rahmenstruktur einer somit durch mehrere Einheiten zusammengesetzten Bodenbearbeitungsmaschine, vorzugsweise Hackgerät. Die Einheit kann aber auch ohne weitere Einheiten eingesetzt werden und somit alleine eine Bodenbearbeitungsmaschine 10 ausbilden.

Die Bodenbearbeitungsmaschine 10 weist einen Maschinenrahmen 12, welcher sich in Vorwärtsrichtung 14 erstreckende Längsträger 16 und quer zur Vorwärtsrichtung 14 erstreckende Querträger 18 umfasst. Die Querträger 18 sind zudem mittels einer quer zur Vorwärtsrichtung orientierten Lagerung drehbar zu den Längsträger 16 angebracht, insbesondere drehbar in diesen gelagert.

Gemäß den Ausführungsbeispielen umfasst der Maschinenrahmen 12 zwei parallel zueinander angeordnete Längsträger 16 und drei parallel zueinander und insbesondere drehbar in den Längsträger 16 gelagerte Querträger 18.

An den Querträger 18 ist jeweils wenigstens ein federnde Eigenschaften aufweisender Zinken 50 angeordnet. An den Zinken 50 ist zudem jeweils ein Schar 60 angebracht. Wobei die Schare jeweils als Gänsefußschare ausgebildet sind und eine durch eine Scharspitze gebildete Vorderkante 62 und von der Vorderkante 62 ausgehende, sich jeweils links und rechts, quer zur Vorwärtsrichtung 14 erstreckende Schneiden 64 aufweisen.

Die Zinken 50 sind insbesondere derartig zueinander beabstandet, dass diese quer zur Vorwärtsrichtung 14 eine ganzflächige Bodenbearbeitung ermöglichen.

Wie insbesondere aus den Figuren 3A & 3B hervorgeht, sind die Querträger 18 mittels einer Koppelstange verbunden, so dass die Drehlage der Querträger 18 jeweils synchron verändert werden kann und die Querträger 18 jeweils eine gleiche Drehlage aufweisen. Zur Veränderung der Drehlage ist ein Hebel 36 mit Raste vorgesehen, so dass jeweils in Abhängigkeit der Hebelposition die Drehlage der Querträger 18 veränderbar ist.

Die Drehlage der Querträger 18 ist insbesondere in Abhängigkeit der federnden Eigenschaften der Zinken 50 veränderbar und/oder anpassbar.

Die Bodenbearbeitungsmaschine 10 ist gemäß der Figur 3A in einer Grundstellung dargestellt wobei hierbei die Drehlage der Querträger 18 derartig ist, dass die Schneiden 64 gegenüber der Vorwärtsrichtung 14 in einem Winkel α von vorne oben nach hinten unten orientiert sind. Wobei die Grundstellung durch einen Betriebsmodus der Bodenbearbeitungsmaschine 10 definiert ist, in der keine oder nur geringe Betriebskräfte auf das Schar 60 und/oder den Zinken 50 wirken. Was bedeutet, dass die Schare 60 insbesondere nicht in eine Bodenfläche eindringen. Was durch eine Linie nochmals verdeutlicht werden soll.

Dementgegen stellt die Figur 3B die Bodenbearbeitungsmaschine 10 in einer Arbeitsstellung dar, wobei in einer Arbeitsstellung der Bodenbearbeitungsmaschine 10 die Schneiden 64 zumindest weitgehend parallel zur Vorwärtsrichtung 14 orientiert sein können.

Wie aus den Figuren 3A und 3B hervorgeht ist sowohl in der Grundstellung als auch in der Arbeitsstellung die Drehlage der drehbaren Querträger 18 jeweils gleich. Wodurch eine Veränderung der Orientierung der Schneiden 64 lediglich durch auf die Zinken 50 und/oder die Schare 60 wirkende Betriebskräfte erfolgt.

Um dies zu verdeutlichen sind diese Zusammenhänge gemäß Figur 3B nochmals deutlich dargestellt, wobei hierbei dargestellt ist, dass in einer Arbeitsstellung der Bodenbearbeitungsmaschine 10 die Schneiden 64 gegenüber einer Vorwärtsrichtung 14 in einem Winkel β von vorne oben nach hinten unten orientiert sind und/oder in einem Winkel β von vorne unten nach hinten oben orientiert sind, wobei der Winkel β maximal 15° oder maximal 10° oder maximal 5° oder maximal 2° beträgt. Wobei der Winkel β insbesondere kleiner als der Winkel α der Grundstellung ist.

Die Arbeitsstellung ist insbesondere durch einen Betriebsmodus der Bodenbearbeitungsmaschine 10 definiert, in der Betriebskräfte auf das Schar 60 und/oder den Zinken 50 wirken, wobei die Betriebskräfte insbesondere eine derartige Größe aufweisen, dass der Zinken 50 Verformt wird.

Die Zinken 50 sind jeweils als Federzinken ausgebildet und weisen jeweils zumindest eine, die federnden Eigenschaften definierende Windung 52 auf.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Schutzbereich der Ansprüche zu verlassen. Zusätzlich können viele Modifikationen ausgeführt werden, ohne den Schutzbereich der Ansprüche zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Bodenbearbeitungsmaschine
- 12: Maschinenrahmen
- 14: Vorwärtsrichtung
- 16: Längsträger
- 18: Querträger
- 20: Mittelteil
- 22: Achse
- 24: Seitenteil
- 26: Zylinder
- 28: Verbindungsvorrichtung
- 30: Packerwalze
- 32: Montagestruktur
- 34: Koppelstange
- 36: Hebel

- 50: Zinken
- 52: Windung

- 60: Schar
- 62: Scharspitze
- 64: Schneide

- α: Winkel Grundstellung
- β: Winkel Arbeitsstellung

## Patentansprüche

1. Bodenbearbeitungsmaschine (10) mit einem, sich in Vorwärtsrichtung (14) erstreckende Längsträger (16) und quer zur Vorwärtsrichtung (14) erstreckende Querträger (18) aufweisenden Maschinenrahmen (12), wobei zumindest ein Querträger (18) mittels einer quer zur Vorwärtsrichtung (14) orientierten Lagerung drehbar zu zumindest einem Längsträger (16) gelagert ist, wobei am drehbaren Querträger (18), zumindest ein, federnde Eigenschaften aufweisender, Zinken (50) mit Schar (60) angebracht ist, welche federnden Eigenschaften durch Federkräfte des Zinken (50) definiert sind und welches Schar (60) eine Vorderkante (62) und von der Vorderkante (62) ausgehende sich quer zur Vorwärtsrichtung (14) erstreckende Schneiden (64) aufweist, wobei die Drehlage des drehbaren Querträger (18) in Abhängigkeit der Federkräfte des Zinken (50) veränderbar ist,
**dadurch gekennzeichnet, dass**
die Variation der Drehlage mittels eines Aktors erfolgt, wobei der Aktor mit einer Steuereinrichtung wirkverbunden ist, welche Steuereinrichtung derartig ausgebildet ist, dass mittels dieser eine automatisierte Variation der Drehlage erfolgt.

2. Bodenbearbeitungsmaschine (10) nach Anspruch 1, **dadurch gekennzeichnet, dass** die Bodenbearbeitungsmaschine (10), eine Grundstellung und eine Arbeitsstellung aufweist, wobei die Drehlage des drehbaren Querträger (18) in der Grundstellung und in der Arbeitsstellung gleich ist.

3. Bodenbearbeitungsmaschine (10) nach Anspruch 1 oder 2, **dadurch gekennzeichnet, dass** in einer Grundstellung der Bodenbearbeitungsmaschine (10) die Drehlage des drehbaren Querträger (18) derartig ist, dass die Schneiden (64) gegenüber der Vorwärtsrichtung (14) in einem Winkel α von vorne oben nach hinten unten orientiert sind.

4. Bodenbearbeitungsmaschine (10) nach Anspruch 3, **dadurch gekennzeichnet, dass** die Grundstellung durch einen Betriebsmodus der Bodenbearbeitungsmaschine (10) definiert ist, in der keine oder nur geringe Betriebskräfte auf das Schar (60) und/oder den Zinken (50) wirken.

5. Bodenbearbeitungsmaschine (10) nach Anspruch 2, **dadurch gekennzeichnet, dass** in einer Arbeitsstellung der Bodenbearbeitungsmaschine (10) die Schneiden (64) zumindest weitgehend parallel zur Vorwärtsrichtung (14) orientiert sind.

6. Bodenbearbeitungsmaschine (10) nach Anspruch 3, **dadurch gekennzeichnet, dass** in einer Arbeitsstellung der Bodenbearbeitungsmaschine (10) die Schneiden (64) gegenüber einer Vorwärtsrichtung (14) in einem Winkel β von vorne oben nach hinten unten orientiert sind und/oder in einem Winkel β von vorne unten nach hinten oben orientiert sind, wobei der Winkel β maximal 15° oder maximal 10° oder maximal 5° oder maximal 2° beträgt und/oder kleiner als der Winkel α der Grundstellung ist.

7. Bodenbearbeitungsmaschine (10) nach einem der vorhergehenden Ansprüche, **dadurch gekennzeichnet, dass** die Arbeitsstellung durch einen Betriebsmodus der Bodenbearbeitungsmaschine (10) definiert ist, in der Betriebskräfte auf das Schar (60) und/oder den Zinken (50) wirken, wobei die Betriebskräfte insbesondere eine derartige Größe aufweisen, dass der Zinken (50) Verformt wird.

8. Bodenbearbeitungsmaschine (10) nach einem der vorhergehenden Ansprüche, **dadurch gekennzeichnet, dass** der Zinken (50) ein Federzinken ist und zumindest eine, die Federkräfte definierende Windung (52) aufweist.

9. Bodenbearbeitungsmaschine (10) nach einem der vorhergehenden Ansprüche, **dadurch gekennzeichnet, dass** das Schar (60) ein Gänsefußschar ist und eine im wesentlichen Dreieckförmige, eine Vorderkante (62) und von der Vorderkante (62) ausgehende sich quer zur Vorwärtsrichtung (14) erstreckende Schneiden (64) aufweisende, Grundform aufweist.

10. Bodenbearbeitungsmaschine (10) nach einem der vorhergehenden Ansprüche, **dadurch gekennzeichnet, dass** diese zumindest zwei drehbar zu einem Längsträger (16) angeordnete Querträger (18) umfasst wobei,
- an den Querträgern (18) jeweils eine gleiche und/oder unterschiedliche Anzahl an Zinken (50) mit Schar (60) angebracht ist und/oder
- wobei die Zinken (50) gleich und/oder unterschiedlich ausgeführt sind und/oder
- wobei die Schare (60) gleich und/oder unterschiedlich ausgeführt sind.

11. Bodenbearbeitungsmaschine (10) nach Anspruch 10, **dadurch gekennzeichnet, dass** die Querträger (18) gekoppelt sind, wobei die Koppelung mittels einer Koppelstange und/oder mittels einer Aktors erfolgt.

12. Bodenbearbeitungsmaschine (10) nach einem der vorhergehenden Ansprüche, **dadurch gekennzeichnet, dass** die Drehlage der Querträger (18) in Abhängigkeit der
- Anzahl an angebrachten Zinken (50) veränderbar ist und/oder
- in Abhängigkeit der Arbeitsbreite der Schare (60) veränderbar ist und/oder
- in Abhängigkeit der Arbeitstiefe der Schare (60) veränderbar ist.

13. Bodenbearbeitungsmaschine (10) nach einem der vorhergehenden Ansprüche, **dadurch gekennzeichnet, dass** diese vorzugsweise ein Hackgerät ist.

14. Verfahren zur Bodenbearbeitung, welches Verfahren mittels einer Bodenbearbeitungsmaschine (10) durchgeführt wird, welche Bodenbearbeitungsmaschine (10), einen sich in Vorwärtsrichtung (14) erstreckende Längsträger (16) und quer zur Vorwärtsrichtung (14) erstreckende Querträger (18) aufweisenden Maschinenrahmen (12) umfasst, wobei zumindest ein Querträger (18) mittels einer quer zur Vorwärtsrichtung (14) orientierten Lagerung drehbar zu zumindest einem Längsträger (16) gelagert ist, wobei am drehbaren Querträger (18), zumindest ein, federnde Eigenschaften aufweisender, Zinken (50) mit Schar (60) angebracht ist, welche federnden Eigenschaften durch Federkräfte des Zinken (50) definiert sind und welches Schar (60) eine Vorderkante (62) und von der Vorderkante (62) ausgehende sich quer zur Vorwärtsrichtung (14) erstreckende Schneiden (64) aufweist, wobei
- ein erster Betriebsmodus vorgesehen ist, welcher einer Grundstellung entspricht in der die Drehlage des Querträgers (18) derartig ist, dass die Schneiden (64) gegenüber der Vorwärtsrichtung (14) in einem Winkel α von vorne oben nach hinten unten orientiert sind,
- und ein zweiter Betriebsmodus vorgesehen ist, welcher einer Arbeitsstellung entspricht in der die Schneiden (64), unter Beibehaltung der Drehlage des Querträger (18) durch auf den Zinken (50) und/oder das Schar (60) wirkende Betriebskräfte, durch eine Verformung des Zinken (50) eine derartige Lageänderung erfahren, dass diese zumindest weitgehend parallel zur Vorwärtsrichtung (14) orientiert sind und/oder in einem Winkel β von vorne oben nach hinten unten orientiert sind und/oder in einem Winkel β von vorne unten nach hinten oben orientiert sind, wobei der Winkel β maximal 15° oder maximal 10° oder maximal 5° oder maximal 2° beträgt und/oder kleiner als der Winkel α der Grundstellung
**gekennzeichnet durch**, eine Veränderung der Drehlage mittels eines Aktors, wobei der Aktor mit einer Steuereinrichtung wirkverbunden ist, welche Steuereinrichtung insbesondere derartig ausgebildet ist, dass mittels dieser eine automatisierte Veränderung der Drehlage des drehbaren Querträger erfolgt.

## Claims

1. A soil-working machine (10) with a machine frame (12), said machine frame having longitudinal members (16) which extend in a forward direction (14) and crossmembers (18) which extend transversely to the forward direction (14), wherein at least one crossmember (18), by means of a bearing arrangement oriented transversely to the forward direction (14), is mounted so as to be rotatable in relation to at least one longitudinal member (16), wherein at least one tine (50), having resilient properties, with coulter (60) is attached to the rotatable crossmember (18), which resilient properties are defined by spring forces of the tine (50) and which coulter (60) has a front edge (62) and blades (64) departing from the front edge (62) and extending transversely to the forward direction (14), wherein the rotational position of the rotatable crossmember (18) is variable in a manner dependent on the spring forces of the tine (50),
**characterized in that**
the variation of the rotational position is realized by means of an actuator, wherein the actuator is operatively connected to a control device, which control device is configured such that an automated variation of the rotational position is realized by means thereof.

2. The soil-working machine (10) according to Claim 1, **characterized in that** the soil-working machine (10) has a home position and a working position, wherein the rotational position of the rotatable crossmember (18) in the home position is the same as in the working position.

3. The soil-working machine (10) according to Claim 1 or 2, **characterized in that**, in a home position of the soil-working machine (10), the rotational position of the rotatable crossmember (18) is such that the blades (64), in relation to the forward direction (14), are oriented at an angle α from the front at the top to the rear at the bottom.

4. The soil-working machine (10) according to Claim 3, **characterized in that** the home position is defined by an operating mode of the soil-working machine (10) in which no or only small operating forces act on the coulter (60) and/or on the tine (50).

5. The soil-working machine (10) according to Claim 2, **characterized in that**, in a working position of the soil-working machine (10), the blades (64) are oriented so as to be at least substantially parallel to the forward direction (14).

6. The soil-working machine (10) according to Claim 3, **characterized in that**, in a working position of the soil-working machine (10), the blades (64), in relation to a forward direction (14), are oriented at an angle β from the front at the top to the rear at the bottom and/or are oriented at an angle β from the front at the bottom to the rear at the top, wherein the angle β is at most 15° or at most 10° or at most 5° or at most 2° and/or is less than the angle α of the home position.

7. The soil-working machine (10) according to one of the preceding claims, **characterized in that** the working position is defined by an operating mode of the soil-working machine (10) in which operating forces act on the coulter (60) and/or on the tine (50), wherein the operating forces are in particular of such a size that the tine (50) is deformed.

8. The soil-working machine (10) according to one of the preceding claims, **characterized in that** the tine (50) is a spring tine and has at least one winding (52) which defines the spring forces.

9. The soil-working machine (10) according to one of the preceding claims, **characterized in that** the coulter (60) is a duck-foot coulter and has a substantially triangular basic form which has a front edge (62) and blades (64) departing from the front edge (62) and extending transversely to the forward direction (14).

10. The soil-working machine (10) according to one of the preceding claims, **characterized in that** said soil-working machine comprises at least two crossmembers (18) which are arranged so as to be rotatable in relation to a longitudinal member (16), wherein
- in each case an identical and/or a different number of tines (50) with coulter (60) are attached to the cross members (18), and/or
- wherein the tines (50) are of identical and/or different design, and/or
- wherein the coulters (60) are of identical and/or different design.

11. The soil-working machine (10) according to Claim 10, **characterized in that** the crossmembers (18) are coupled, wherein the coupling is realized by means of a coupling bar and/or by means of an actuator.

12. The soil-working machine (10) according to one of the preceding claims, **characterized in that** the rotational position of the crossmembers (18)
- is variable in a manner dependent on the number of attached tines (50), and/or
- is variable in a manner dependent on the working width of the coulters (60), and/or
- is variable in a manner dependent on the working depth of the coulters (60).

13. The soil-working machine (10) according to one of the preceding claims, **characterized in that** said soil-working machine is preferably a hoeing device.

14. A method for working soil, which method is carried out by means of a soil-working machine (10), which soil-working machine (10) comprises a machine frame (12), said machine frame having longitudinal members (16) which extend in a forward direction (14) and crossmembers (18) which extend transversely to the forward direction (14), wherein at least one crossmember (18), by means of a bearing arrangement oriented transversely to the forward direction (14), is mounted so as to be rotatable in relation to at least one longitudinal member (16), wherein at least one tine (50), having resilient properties, with coulter (60) is attached to the rotatable crossmember (18), which resilient properties are defined by spring forces of the tine (50) and which coulter (60) has a front edge (62) and blades (64) departing from the front edge (62) and extending transversely to the forward direction (14), wherein
- a first operating mode is provided, which first operating mode corresponds to a home position in which the rotational position of the crossmember (18) is such that the blades (64), in relation to the forward direction (14), are oriented at an angle α from the front at the top to the rear at the bottom,
- and a second operating mode is provided, which second operating mode corresponds to a working position in which the blades (64), with the rotational position of the crossmember (18) maintained, by way of operating forces acting on the tine (50) and/or on the coulter (60), undergo, as a result of a deformation of the tine (50), such a variation in position that said blades are oriented so as to be at least substantially parallel to the forward direction (14) and/or are oriented at an angle β from the front at the top to the rear at the bottom and/or are oriented at an angle β from the front at the bottom to the rear at the top, wherein the angle β is at most 15° or at most 10° or at most 5° or at most 2° and/or is less than the angle α of the home position, **characterized by** a variation of the rotational position by means of an actuator, wherein the actuator is operatively connected to a control device, which control device is configured in particular such that an automated variation of the rotational position of the rotatable crossmember is realized by means thereof.

## Revendications

1. Machine de travail du sol (10) avec un bâti de machine (12) présentant des longerons (16) s'étendant dans la direction avant (14) et des traverses (18) s'étendant de manière transversale par rapport à la direction avant (14), dans laquelle au moins une traverse (18) est montée de manière à pouvoir tourner par rapport à au moins un longeron (16) au moyen d'un palier orienté de manière transversale par rapport à la direction avant (14), dans laquelle au moins une dent (50), présentant des propriétés élastiques, avec un soc (60) est installée sur la traverse (18) rotative, lesquelles propriétés élastiques sont définies par des forces de ressort de la dent (50) et lequel soc (60) présente une arête avant (62) et des tranchants (64) partant de l'arête avant (62), s'étendant de manière transversale par rapport à la direction avant (14), dans laquelle la position de rotation de la traverse (18) rotative peut être modifiée en fonction des forces de ressort de la dent (50),
**caractérisée en ce que**
la variation de la position de rotation est effectuée au moyen d'un actionneur, dans laquelle l'actionneur coopère avec un système de commande, lequel système de commande est réalisé de telle manière qu'une variation automatisée de la position de rotation est effectuée au moyen de celui-ci.

2. Machine de travail du sol (10) selon la revendication 1, **caractérisée en ce que** la machine de travail du sol (10) présente une position de base et une position de travail, dans laquelle la position de rotation de la traverse (18) rotative est la même dans la position de base et dans la position de travail.

3. Machine de travail du sol (10) selon la revendication 1 ou 2, **caractérisée en ce que** dans une position de base de la machine de travail du sol (10), la position de rotation de la traverse (18) rotative est telle que les tranchants (64) sont orientés par rapport à la direction avant (14) selon un angle α du haut à l'avant vers le bas à l'arrière.

4. Machine de travail du sol (10) selon la revendication 3, **caractérisée en ce que** la position de base est définie par un mode de fonctionnement de la machine de travail du sol (10), dans laquelle aucune ou seulement des forces de fonctionnement modérées agissent sur le soc (60) et/ou sur la dent (50).

5. Machine de travail du sol (10) selon la revendication 2, **caractérisée en ce que** dans une position de travail de la machine de travail du sol (10), les tranchants (64) sont orientés au moins largement de manière parallèle par rapport à la direction avant (14).

6. Machine de travail du sol (10) selon la revendication 3, **caractérisée en ce que** dans une position de travail de la machine de travail du sol (10), les tranchants (64) sont orientés par rapport à une direction avant (14) selon un angle β depuis le haut à l'avant vers le bas à l'arrière et/ou selon un angle β depuis le bas à l'avant vers le haut à l'arrière, dans laquelle l'angle β est de 15° au maximum ou de 10° au maximum ou de 5° au maximum ou de 2° au maximum, et/ou est inférieur à l'angle α de la position de base.

7. Machine de travail du sol (10) selon l'une quelconque des revendications précédentes, **caractérisée en ce que** la position de travail est définie par un mode de fonctionnement de la machine de travail du sol (10), dans laquelle des forces de fonctionnement agissent sur le soc (60) et/ou la dent (50), dans laquelle les forces de fonctionnement présentent en particulier une taille telle que la dent (50) est déformée.

8. Machine de travail du sol (10) selon l'une quelconque des revendications précédentes, **caractérisée en ce que** la dent (50) est une dent à ressort et présente au moins une spire (52) définissant les forces de ressort.

9. Machine de travail du sol (10) selon l'une quelconque des revendications précédentes, **caractérisée en ce que** le soc (60) est un soc en patte d'oie et présente une forme de base sensiblement triangulaire, présentant une arête avant (62) et des tranchants (64) partant de l'arête avant (62), s'étendant de manière transversale par rapport à la direction avant (14).

10. Machine de travail du sol (10) selon l'une quelconque des revendications précédentes, **caractérisé en ce que** celle-ci comprend au moins deux traverses (18) disposées de manière à pouvoir tourner par rapport à un longeron (16), dans laquelle
- respectivement un nombre identique et/ou différent de dents (50) avec un soc (60) est installé sur les traverses (18), et/ou
- dans laquelle les dents (50) sont réalisées de manière identique et/ou différente, et/ou
- dans laquelle les socs (60) sont réalisés de manière identique et/ou différente.

11. Machine de travail du sol (10) selon la revendication 10, **caractérisée en ce que** les traverses (18) sont couplées, dans laquelle le couplage est effectué au moyen d'une tige de couplage et/ou au moyen d'un actionneur.

12. Machine de travail du sol (10) selon l'une quelconque des revendications précédentes, **caractérisée en ce que** la position de rotation des traverses (18) peut être modifiée
- en fonction du nombre de dents (50) installées et/ou
- en fonction de la largeur de travail des socs (60) et/ou
- en fonction de la profondeur de travail des socs (60) .

13. Machine de travail du sol (10) selon l'une quelconque des revendications précédentes, **caractérisée en ce que** celle-ci est de préférence une bineuse.

14. Procédé de travail du sol, lequel procédé est mis en œuvre au moyen d'une machine de travail du sol (10), laquelle machine de travail du sol (10) comprend un bâti de machine (12) présentant des longerons (16) s'étendant dans la direction avant (14) et des traverses (18) s'étendant de manière transversale par rapport à la direction avant (14),
dans lequel au moins une traverse (18) est montée de manière à pouvoir tourner par rapport à au moins un longeron (16) au moyen d'un palier orienté de manière transversale par rapport à la direction avant (14), dans lequel au moins une dent (50), présentant des propriétés élastiques, avec un soc (60) est installée sur la traverse (18) rotative, lesquelles propriétés élastiques sont définies par des forces de ressort de la dent (50) et lequel soc (60) présente une arête avant (62) et des tranchants (64) partant de l'arête avant (62), s'étendant de manière transversale par rapport à la direction avant (14),
dans lequel
- un premier mode de fonctionnement est prévu, lequel correspond à une position de base, dans laquelle la position de rotation de la traverse (18) est telle que les tranchants (64) sont orientés par rapport à la direction avant (14) selon un angle α depuis le haut à l'avant vers le bas à l'arrière,
- et un deuxième mode de fonctionnement est prévu, lequel correspond à une position de travail, dans laquelle les tranchants (64) subissent, tout en conservant la position de rotation de la traverse (18) du fait de forces de fonctionnement agissant sur la dent (50) et/ou le soc (60), du fait d'une déformation de la dent (50), un changement de position tel que ceux-ci sont orientés au moins largement de manière parallèle par rapport à la direction avant (14) et/ou sont orientés selon un angle β depuis le haut à l'avant vers le bas à l'arrière et/ou sont orientés selon un angle β depuis le bas à l'avant vers le haut à l'arrière, dans lequel l'angle β est de 15° au maximum ou de 10° au maximum ou de 5° au maximum ou de 2° au maximum et/ou est inférieur à l'angle α de la position de base,
**caractérisé par** une modification de la position de rotation au moyen d'un actionneur, dans lequel l'actionneur coopère avec un système de commande, lequel système de commande est réalisé en particulier de telle manière qu'une modification automatisée de la position de rotation de la traverse rotative est effectuée au moyen de celui-ci.
